(19) **Europäisches Patentamt** / **European Patent Office** / **Office européen des brevets**

(11) **EP 4 435 252 A1**

(12) **EUROPEAN PATENT APPLICATION**

(43) Date of publication:
**25.09.2024 Bulletin 2024/39**

(21) Application number: **23163473.4**

(22) Date of filing: **22.03.2023**

(51) International Patent Classification (IPC):
**F03D 7/02** $^{(2006.01)}$     **F16F 7/10** $^{(2006.01)}$
**F16F 15/22** $^{(2006.01)}$

(52) Cooperative Patent Classification (CPC):
**F03D 7/0296; F16F 7/1011; F16F 15/223;**
F05B 2260/964

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **TOTALENERGIES ONETECH**
**92400 Courbevoie (FR)**

(72) Inventors:
• **GENTIL, Frédéric**
  **92400 COURBEVOIE (FR)**
• **DE LATAILLADE, Tristan**
  **92400 COURBEVOIE (FR)**
• **AHMEDI, Arsim**
  **92400 COURBEVOIE (FR)**
• **CAPALDO, Mattéo**
  **92400 COURBEVOIE (FR)**

(74) Representative: **Plasseraud IP**
**104 Rue de Richelieu**
**CS92104**
**75080 Paris Cedex 02 (FR)**

(54) **AN ACTIVE VIBRATION CONTROLLING DEVICE FOR A WIND TURBINE**

(57)     It is disclosed an active vibration controlling device (10) for a wind turbine (20) having a mast (21), a nacelle (22) and a plurality of rotating blades (230), the device comprising:
- two inertial eccentric masses (11) rotative about an axis (M-M) perpendicular to the axis (X-X) of the mast, and
- a driving device (12) suitable for moving the inertial masses in rotation in opposite directions of rotation according to a movement suitable to generate a load on the wind turbine counteracting oscillations produced at at least one excitation frequency of the wind turbine.

It is also disclosed a wind turbine comprising such active vibration controlling device.

FIG. 3b

## Description

## Technical Field

This disclosure relates to an active vibration controlling device for a wind turbine, and a wind incorporating the same.

## Background Art

Wind turbine, and in particular floating wind turbines, are subject to vibrations caused by various environmental loads such as wind, currents, and vibrations generated by the operation of the wind turbine itself, such as the rotational speed of the rotor, which may be referred to as 1p frequency, and the vibrations induced by the blades passing in front of the mast of the wind turbine, which is generally referred to as 3p frequency since wind turbine generally comprise three blades.

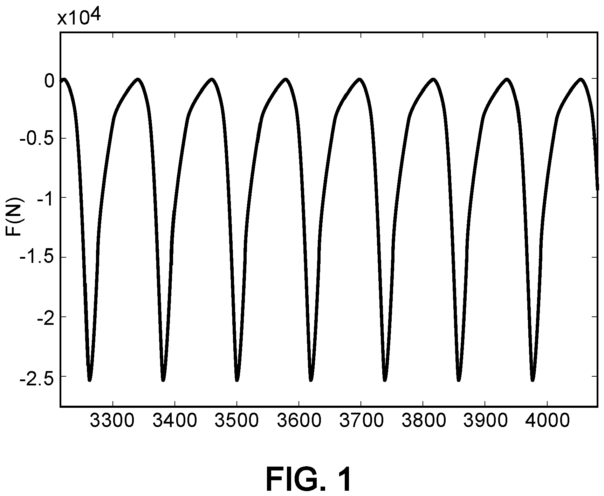

Those vibrations induce stress and fatigue on the structure of the wind turbine, as is apparent from figure 1 which represents the variation of force exerted on the mast by each blade passage in front of the mast of the wind turbine. This force extends perpendicularly to the axis of the mast and along the nacelle (which is orientable according to the direction of the wind) and is variable with time since it varies with the angular position of the blades.

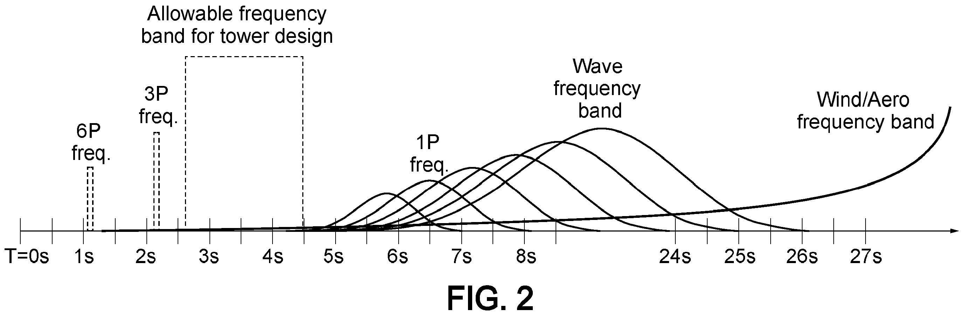

Furthermore, the structure of the wind turbine has its own natural frequencies, which depend on the sizing of the turbine, and the wind turbine must be designed such that a frequency gap is maintained between the natural frequencies of the turbine and the excitation frequencies of the environmental loads. This constraint is particularly harsh for floating wind turbines, as shown in the frequency diagram of figure 2, because the allowable frequency range is limited on the one hand by the 3p excitation frequency and on the other hand by the band of excitation frequencies caused by the waves. Furthermore, floating wind turbines tend to have more massive designs than terrestrial wind turbines, which leads to an increase of the 3p frequency which further narrows the range of allowable frequency range for natural frequencies.

## Summary

This disclosure improves the situation.

One aim of the present disclosure is to propose an active vibration controlling device for a wind turbine which is configured for counteracting the vibrations occurring within the wind turbine at at least one excitation frequency. In particular, an aim of the present disclosure is to remove vibrations induced at the 3p excitation frequency, i.e. the vibrations induced by the blades of the wind turbine passing in front of the mast.

It is proposed a active vibration controlling device for a wind turbine having a mast, a nacelle and a plurality of rotating blades, the device comprising:

- two inertial eccentric masses rotative about an axis perpendicular to the axis of the mast, and
- a driving device suitable for moving the inertial masses in rotation in opposite directions of rotation according to a movement suitable to generate a load on the wind turbine counteracting oscillations produced at at least one excitation frequency of the wind turbine.

In embodiments, the at least one excitation frequency of the wind turbine is the frequency at which the rotating blades pass in front of the mast.

In embodiments, the active vibration controlling device further comprises a controller configured to receive information relative to the frequency and phase of rotation of the rotating blades, and to control the driving device to rotate the masses according to a movement which frequency and phase are determined from the received information.

In embodiments, the active vibration controlling device further comprises an enclosure containing at least the inertial masses and driving device, and the enclosure is mounted on an outer wall of the wind turbine.

In embodiments, the driving device comprises an electrical motor and an actuator, and the active vibration controlling device further comprises a source of electrical energy chosen among a battery of the active vibration controlling device and a connection to an electrical system of the wind turbine.

It is also disclosed a wind turbine comprising a mast, a nacelle and a plurality of rotating blades, the wind turbine further comprising an active vibration controlling device according to the above description.

In embodiments, the active vibration controlling device is located within the nacelle of the wind turbine.

In embodiments, the wind turbine comprises a rotor rotatably mounted on the nacelle and on which are mounted the blades, and the driving device of the active vibration controlling device comprises a mechanical transmission device for drawing rotational power from the rotor and transmitting the same to the eccentric masses.

In embodiments, the power transmission device comprises at least one of a gearbox, a toothed pulley or chain.

In embodiments, the wind turbine comprises a rotor rotatably mounted on the nacelle and on which are mounted the blades, wherein the driving device of the active vibration controlling device comprises an electrical motor, an actuator, and a source of electrical energy feeding the electrical motor, chosen among an electrical system of the turbine and an alternator configured for converting rotational power of the rotor into electrical power.

In embodiments, the wind turbine is a floating wind turbine.

The active vibration controlling device disclosed above enables reducing fatigue induced by vibrations on a wind turbine by using two counter-rotating eccentric masses, where the rotation of the masses is configured to induce oscillations that counteract oscillations produced at at least one excitation frequency of the wind turbine, for instance the 3p frequency at which the blades pass in front of the mast.

**Brief Description of Drawings**

Other features, details and advantages will be shown in the following detailed description and on the figures, on which:

- Fig. 1, already mentioned, represents the force variation from a maximum value applied on the mast of a wind turbine, due to the passage of a blade in front of the mast.

- Fig. 2, already mentioned, represents an example of frequency diagram applicable to a floating wind turbine, displaying the excitation frequencies of the turbine induces by the rotor and blades, as well as the frequency bands of the waves and wind.

- Fig 3a schematically represents a wind turbine integrating an active vibration controlling device according to an embodiment.

- Fig. 3b schematically represents an active vibration controlling device as a stand-alone device according to an embodiment.

- Fig. 4 schematically represents the forces induced by the rotation of the inertial masses.

- Fig. 5 represents a possible embodiment of an active vibration controlling device.

- Figures 6a and 6b represent examples of possible locations of an active vibration controlling device.

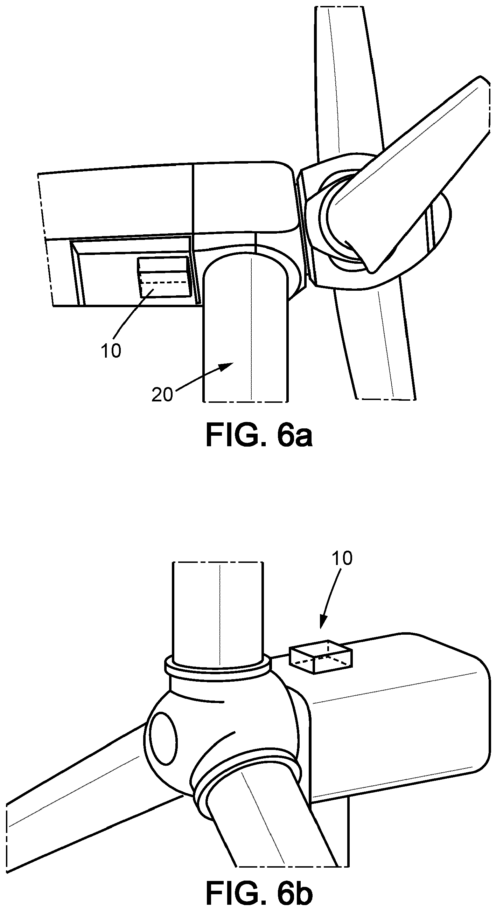

- Fig. 6 represents an example of simulation of an axial load applied to the mast of a wind turbine with and without implementing an active vibration control.

**Description of Embodiments**

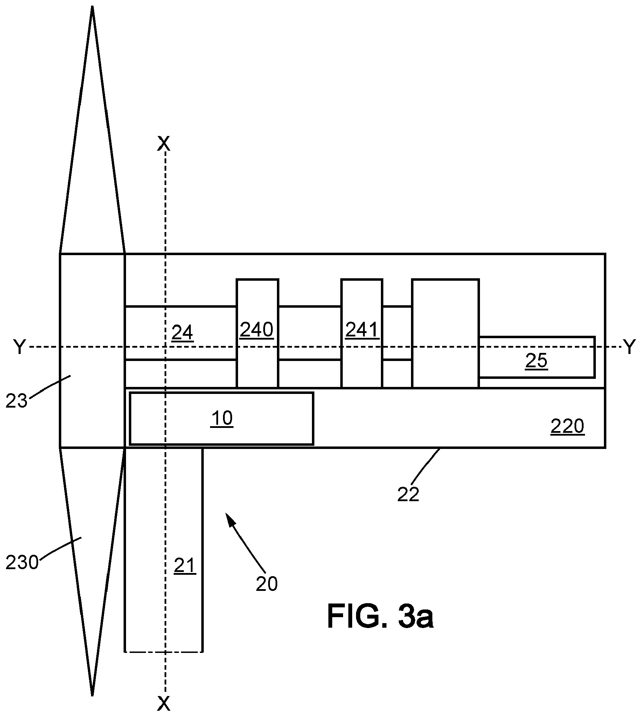

With reference to figures 3a, 3b,4 and 5, embodiments of a wind turbine 20 integrating an active vibration controlling device 10 will now be disclosed. The wind turbine 20 may be an onshore wind turbine or an offshore wind turbine, in which case the wind turbine may be floating on a water body such as a sea or a lake, or fixed to the waterbed.

The wind turbine comprises a mast 21 which may be generally rectilinear and extend along an axis X-X. In embodiments, the mast 21 may have a shape that is widening from the upper end where the nacelle is mounted, towards the base. For instance, the mast may comprise a plurality of legs joining at the upper end of the mast and assembled at their base on a common platform. In This case, the axis X-X of the mast is interpreted as the axis joining the upper end to the center of the base. If the mast comprises a plurality of legs, the center of the base of the mast is at the center of the basis of the legs. In operation, the axis X-X is supposed to extend vertically although, in particular for floating wind turbine, the axis may be offset from the vertical when the wind turbine is subject to wind or waves. The wind turbine also comprises a nacelle 22, mounted on top of the mast 21 and extending along an axis Y-Y, which is transverse to the axis of the mast, generally perpendicular to the axis of the mast. The nacelle 22 is rotatably mounted to the mast about the axis X-X of the mast, in order to be orientable according to the direction of the wind.

The wind turbine further comprises a rotor 23, rotatably mounted on an end of the nacelle 22. The rotor 23 comprises a plurality of blades, for instance three blades 230. Each blade may be pivotably mounted around its respective axis. The nacelle 22 of the wind turbine further encloses a main shaft 24 which is rotationally fixed to the rotor 23 and is induced to rotate by the rotor, which is itself induced to rotate by the force applied by the wind on the blades. The main shaft 24 extends in a direction transverse to the axis of the mast, for instance perpendicular to said axis, i.e. parallel to the axis Y-Y of the nacelle. Alternatively, the angle of the main shaft may be offset by an angle, for instance of less than 10°, with respect to the axis Y-Y of the nacelle. The nacelle 22 may comprise a bedplate 220, forming a support for the main shaft 24, which may be mounted to the bedplate via main bearings 240, 241. The nacelle 22 further includes a gearbox 27 and an electrical generator 25, in particular an alternator, that converts the rotational energy of the rotor into electricity. The nacelle 11 of the wind turbine further comprises electrical transmission means as well as control means that are not detailed here and not shown in the figures.

As explained above, the wind turbine 20 is subject to oscillations produced at various excitation frequencies. Some of the excitation frequencies may be variable and hardly predictable, such as the frequency of the waves in the case of an offshore wind turbine, but some of the excitation frequencies are well known and predictable. This is the case for the 1p, 3p and 6p (etc.) excitation frequencies of the wind turbine, corresponding respectively to the frequency of rotation of the rotor, the frequency at which the blades pass in front of the mast, and its multiples. In what follows, the terms "3p excitation frequency" will be used to designate the frequency at which the blades pass in front of the mast, as the wind turbines generally comprise three blades, but the same wording is also applicable for a different number of blades, for instance four or five blades.

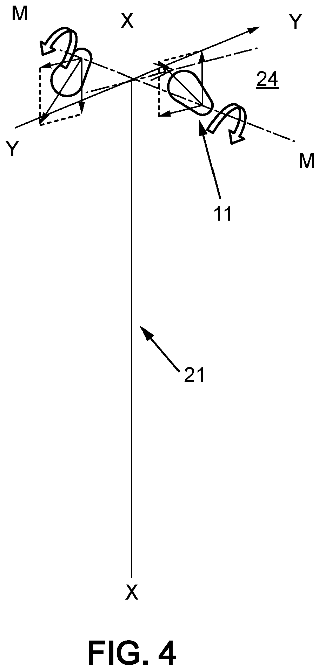

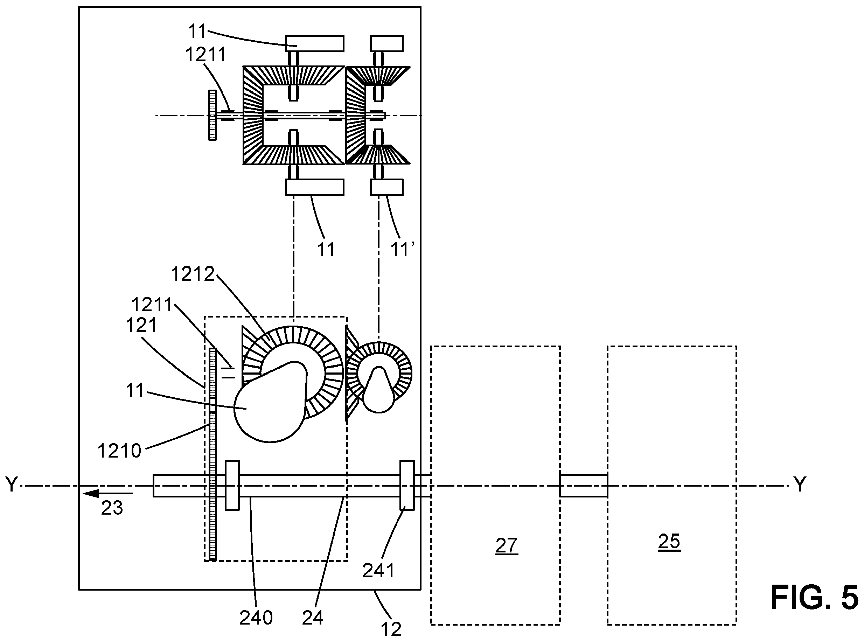

Accordingly, an active vibration controlling device 10 is disclosed that enables counteracting the oscillations induced on the wind turbine at at least one determined and predictable excitation frequency. With reference to figures 4 and 5, the active vibration controlling device 10 comprises two eccentric inertial masses 11 rotatably mounted about respective axes of rotation, the axes of rotation of the two masses being parallel, or preferably about the same axis of rotation M-M as shown in figure 4, said axis of rotation extending perpendicular to the axis X-X of the mast of the wind turbine and transversely to the direction of the nacelle. The axis of rotation of the masses may in particular be perpendicular to the axis X-X of the mast and perpendicular to the axis Y-Y of the nacelle. The two eccentric inertial masses are preferably identical. In particular, they have the same mass m1=m2. The active vibration controlling device further comprises a driving device 12 suitable for moving the inertial masses in rotation in opposite directions of rotation according to a movement suitable for generating, on the wind turbine, a load that is variable with time, in particular oscillatory, and which counteract oscillations produced at said excitation frequency.

By "active", it is thus meant that the motion of the mass is actively controlled and requires a controllable source of energy for setting the desired motion. The active vibration controlling device 10 must thus be distinguished from a passive damping device in which an inertial mass is urged to move by the movement of the structure, i.e. of the wind turbine itself, according to a frequency that is neither controlled nor predictable.

In particular, the rotational frequency of the eccentric masses, i.e. the frequency of rotation of each mass, or the number of rotations per time unit of each mass, is controlled by the driving device to correspond to said excitation frequency to counteract. The two eccentric masses are thus driven in rotation by the driving device at the same rotational speed and hence same rotational frequency. Also, the rotational motions of the eccentric masses are in phase, which means that, due to the counter rotation of the masses, the angular position of a mass at a given time is always symmetric to the angular position of the other mass.

According to an example, the active vibration controlling device 10 is configured for generating a variable load counteracting the oscillations induced on the wind turbine by the motion of the blades passing in front of the mast, i.e. the oscillations induced at the 3p excitation frequency, i.e. which is three times the rotation frequency of the rotor. In this case, the driving device 12 is configured for rotating the eccentric masses 11 with a rotational frequency equal to the 3p frequency, and with a phase that is adapted to the phase of the motion of the blades, such that the maximum axial load induced by the motion of the masses on the wind turbine occurs simultaneously to a maximum axial load induced in an opposite direction by the motion of a blade passing in front of the mast. In other words, the phase of the active vibration controlling device 10 is set to minimize a load variation on the mast during a full rotation of the blades.

With reference to figure 4, the rotation of each mass generates a force having components on two axes perpendicular to the axis of rotation of the masses, one axis being parallel to the axis X-X of the mast and one axis being parallel to the axis Y-Y of the nacelle. The counter-rotation of the masses in phase opposition to one another enables to cancel the components that are parallel to the axis X-X of the mast, and to sum the components that are parallel to the axis Y-Y of the nacelle. The cumulative force exerted along axis Y-Y by the two masses is expressed as follows:

$$F(t) = (m_1 + m_2)\omega^2 r sin(\alpha(t) + \theta)$$

Where $\omega$ is the angular speed of the masses, which is for instance set equal to the 3p rotation speed (i.e. three times the angular speed of the rotor), and $\alpha(t) + \theta$ is the angular position of one of the masses, the other being oriented at a angle $\pi - (\alpha(t) + \theta)$, with $\alpha(t)$ being the angle of the mass as measured from an initial position where the principal direction of the mass is parallel to the axis X-X and $\theta$ is the phase that is calibrated with respect to the counteracted excitation frequency loading. $\theta$ may be determined by numerical screening by determining the value for which (F-Fex) is minimum, where Fex is the load generated on the wind turbine at the determined excitation frequency. Fex may in particular be equal to the load F3P exerted on the mast by the rotation of the blades in front of the mast. It is also possible to determine a value for $\theta$ by deriving analytically the relation between the function min(F-Fex) according to $\theta$.

According to a first embodiment shown in figure 3a, the active vibration controlling device 10 may be integrated within the wind turbine 20, preferably within the nacelle of the wind turbine. Indeed, as the nacelle is rotatably mounted on the mast, the load applied to the mast by the motion of the blades depends on the orientation of the nacelle. Mounting the active vibration controlling device 10 within the nacelle, with a rotation axis of the masses parallel to the axis Y-Y of the nacelle or or the main shaft 24 thus ensures that the rotation axis of the masses is properly oriented with respect to the interactions that are counteracted. If the active vibration controlling device is mounted within the mast 21, for instance, it requires that the rotation axes of the masses be orientable about the axis of the mast.

According to a first embodiment shown in figure 5, the rotor 23 of the wind turbine may be used as the source of mechanical energy for rotating the eccentric masses, and the driving device 12 may comprise a mechanical transmission device 121 for drawing rotational power from the main shaft 24 of the rotor 23, and transferring it to the rotation axis of the eccentric masses 11. For instance, the mechanical transmission device 121 may comprise one or more gears, a toothed pulley or a chain for transmitting the rotational power of the rotor to a secondary shaft, and other gears, pulley or chain for transmitting the rotational power from the secondary shaft to the rotating shafts on which are mounted the masses. The power transmission device may further be configured to apply a desired reduction ratio between the frequency of rotation of the rotor and the frequency of rotation of each mass. According to a non-limiting example, when the active vibration controlling device is configured to counteract oscillations produced at the 3p oscillation frequency, the power transmission device may be configured to multiply the rotation frequency at the rotor by the number of blades (e.g. 3). As shown in the example of figure 5, the transmission device 121 may comprise first gears or a toothed pulley 1210 for transmitting the rotational power of the main shaft 24 to a secondary shaft 1211 extending parallel to the axis of the rotor, and second gears 1212 angled at 90° for converting the rotational motion of the secondary shaft into a rotational motion that is perpendicular to the secondary shaft, i.e. perpendicular to the axis of the rotor. The eccentric masses are rotatably driven by the rotation of the gears angled at 90° with the gear that is driven by the secondary shaft 1211. Additional eccentric masses 11' may be provided, being rotative about the same axis of rotation as the masses 11, with another reduction ratio being applied between the frequency of rotation of the rotor and the frequency of rotation of the additional masses 11' in order for the rotation of the masses to counteract the oscillations induced at another oscillation frequency, for instance the 6p frequency.

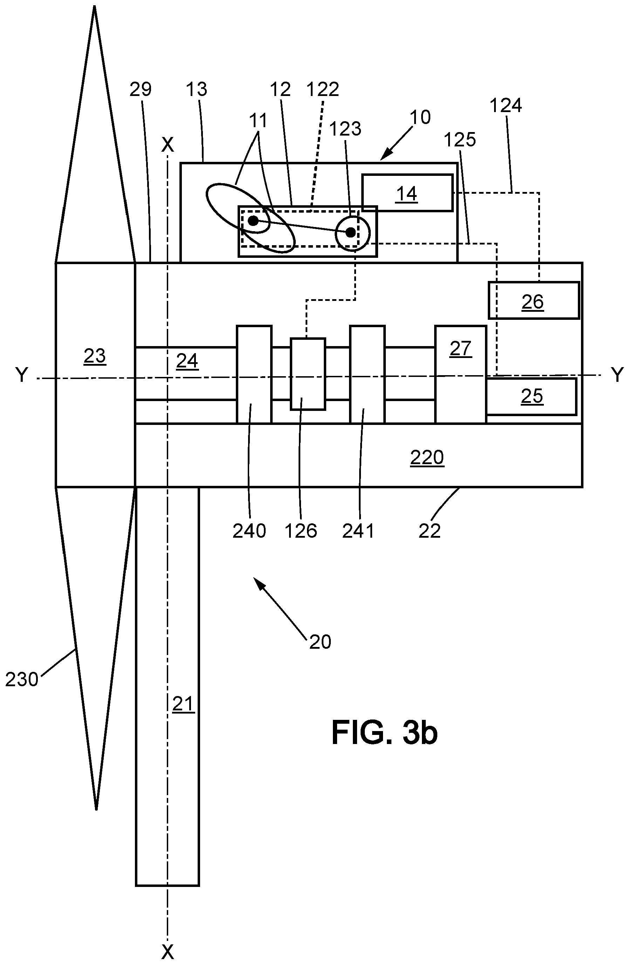

Alternatively, and as shown for instance in figure 3b, the driving device 12 of the active vibration controlling device 10 may comprise a motor 123, in particular an electrical motor that may be fed by an electrical system of the turbine, such as a battery, an auxiliary power unit, the generator 25 of the wind turbine or any component receiving electrical power converted from the power issued from the generator. The electrical motor may also be fed by the grid to which the turbine is injecting the generated power. In embodiments, the driving device may also comprise an alternator 126 configured for converting rotational power of the rotor into electrical power, and the motor 123 is fed by said alternator. The driving device 12 may also comprise a transmission device 121 for transferring the rotational power of the rotating shaft of the motor to the eccentric masses 11. The transmission device may be designed the same way as the one that has been described above with reference to figure 5.

When the active vibration controlling device 10 comprises a separate motor 123, it may further comprise a controller 14 configured to receive information relative to the operation of the wind turbine, such as the rotational speed of the rotor, or the frequency of rotation of the blades, and the phase of the motion of the blades, i.e. their angular position relative to the mast, and synchronize the rotation of the masses accordingly. The controller 14 can comprise a computing device comprising a processor, microprocessor, or microcontroller, a memory storing instructions executed by the computing device, and a communication interface enabling the controller to receive the above-mentioned information. In embodiments, the wind turbine 20 comprises a computing system 26 configured for controlling and monitoring operation of the wind turbine, in particular for controlling and monitoring the generator's operation and the rotor shaft speed. This computing system 26 may be an industrial computer, which can comprise various processors, FPGAs, sensors, etc. In this case, the communication interface 124 is configured for connecting the controller to said computing system, either via a wired communication (e.g. using an Ethernet cable) or a wireless communication (e.g. by Bluetooth or WiFi protocols). Alternatively, the active vibration controlling device 10 may comprise at least one separate sensor for obtaining the above-mentioned information and providing the same to the controller.

The controller 14 then controls the motor 123 to rotate the eccentric masses 11 according to the received information about the frequency and phase of the blades.

The active vibration controlling device may be positioned as close as possible to the mast so that the path of the load induced by the movement of the eccentric masses is reduced. For instance, the active vibration controlling device may be mounted on the bedplate 220 of the nacelle 22, adjacent to the main shaft.

According to another embodiment shown in figure 3b, the active vibration controlling device 20 may be provided as a stand-alone product that may be mounted on a wind turbine after the assembly of the wind turbine, for instance during the service life of the wind turbine. Thus, it is possible to provide active vibration control even for a wind turbine that has not been initially designed and produced to incorporate the system 10.

In that case, the active vibration controlling device 10 comprises an enclosure 13 in which the inertial masses 11 and driving device 12 are contained, and the enclosure can be mounted on an outer wall 29 of the wind turbine, for instance on an outer wall of the nacelle. Figures 6a and 6b show exemplary implementations where the active vibration controlling device 20 as a stand-alone product is mounted on respectively a lower wall or an upper wall of the nacelle. In any case, active vibration controlling device is preferably mounted such that the rotation axis of the inertial masses extends perpendicularly to the axis X-X of the mast and perpendicularly to the axis Y-Y of the nacelle.

Further, when the active vibration controlling device is provided as a stand-alone device, a direct mechanical transmission between the rotor and the mass is not possible, so the active vibration controlling device 10 comprises a motor 123 and an actuator such as a mechanical transmission device 121 for transmitting the rotational power of the motor's output shaft to the masses 11. The motor is preferably an electrical motor which may be fed either by an electrical system of the wind turbine such as those cited above, via an electrical connection 125 to said system, or by a battery contained within the enclosure.

The active vibration controlling device 10 may also comprise in this embodiment a controller 14 as mentioned above, configured for receiving information relative to the operation of the wind turbine, and which may be connected to a computing system 26 of the wind turbine and/or sensors by a communication interface 124. Here also, the communication between the computing system 26 of the wind turbine and the controller 14 may either be wired (e.g. using an Ethernet cable) or wireless (e.g. by Bluetooth or WiFi protocols).

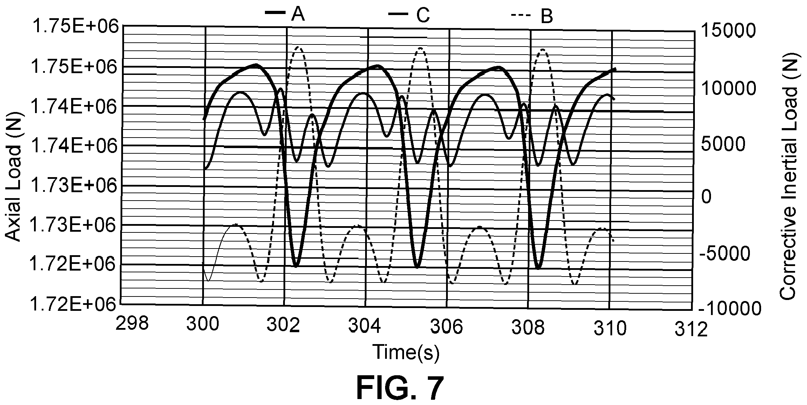

Fig. 7 represents an example of simulation of an axial load applied to the mast of a wind turbine with and without implementing an active vibration control. The simulation is performed on a wind turbine having a power of 15MW, a mast weighing 860 tons, a rotor and nacelle assembly weighing 1017 tons and an inertial mass of 1.5 ton. Curve A represents the axial load on the mast incurred by the passage of the blades, curve B represents the corrective inertial load incurred by the inertial masses and curve C represents the corrective loads induced by the blades. According to this simulation, inertial masses rotated with an oscillatory frequency corresponding to the 3p frequency and with a phase determined to maximize load variation reduction on the mast, enables reducing the axial load incurred on the mast by the blades by a factor of 0.41.

List of numeral references:

- 10 : Active vibration controlling device
- 11, 11': eccentric masses
- 12 : driving device
- 121 : mechanical transmission device
- 1210: first gears
- 1211 : secondary shaft
- 1212 : second gears
- 123 : motor
- 124 : communication interface
- 125 : electrical connection
- 126 : alternator
- 13 : enclosure
- 14 : controller
- 20 : wind turbine
- 21 : mast
- 22 : nacelle
- 23 : rotor
- 230 : blades
- 24 : main shaft
- 25 : generator
- 26 : computing system
- 27 : gearbox
- 29: outer wall

**Claims**

1. An active vibration controlling device (10) for a wind turbine (20) having a mast (21), a nacelle (22) and a plurality of rotating blades (230), the device (10) comprising:

    - two inertial eccentric masses (11) rotative about an axis (M-M) perpendicular to the axis (X-X) of the mast, and
    - a driving device (12) suitable for moving the inertial masses in rotation in opposite directions of rotation according to a movement suitable to generate a load on the wind turbine counteracting oscillations produced at at least one excitation frequency of the wind turbine.

2. The active vibration controlling device (10) according to claim 1, wherein the at least one excitation frequency of the wind turbine is the frequency at which the rotating blades pass in front of the mast.

3. The active vibration controlling device (10) according to claim 1 or 2, further comprising a controller (14) configured to receive information relative to the frequency and phase of rotation of the rotating blades (230), and to control the driving device (12) to rotate the masses according to a movement which frequency and phase are determined from the received information.

4. The active vibration controlling device (10) according to any of the preceding claims further comprising an enclosure (13) containing at least the inertial masses (11) and driving device (12), and the enclosure (13) is mounted on an outer wall (29) of the wind turbine.

5. An active vibration controlling device (10) according to claim 4, wherein the driving device (12) comprises an electrical motor (123) and an actuator (121), and the active vibration controlling device (10) further comprises a source of electrical energy chosen among a battery of the active vibration controlling device (10) and a connection (125) to an electrical system of the wind turbine.

6. A wind turbine (20) comprising a mast (21), a nacelle (22) and a plurality of rotating blades (230), the wind turbine further comprising an active vibration controlling device (10) according to any of the preceding claims.

7. The wind turbine (20) according to claim 6, wherein the active vibration controlling device (10) is located within the nacelle (22).

8. The wind turbine (20) according to any claims 6 or 7, wherein the wind turbine (20) comprises a rotor (23) rotatably mounted on the nacelle and on which are mounted the blades, and wherein the driving device (12) of the active vibration controlling device (10) comprises a mechanical transmission device (121) for drawing rotational power from the rotor (23) and transmitting the same to the eccentric masses.

9. The wind turbine (20) according to the preceding claim, wherein the power transmission device (121) comprises at least one of a gearbox, a toothed pulley or chain.

10. The wind turbine (20) according to any of claims 6 or 7, wherein the wind turbine comprises a rotor (23) rotatably mounted on the nacelle and on which are mounted the blades, wherein the driving device (12) of the active vibration controlling device (10) comprises an electrical motor (123), an actuator (121), and a source of electrical energy feeding the electrical motor, chosen among an electrical system of the turbine and an alternator configured for converting rotational power of the rotor into electrical power.

11. The wind turbine (20) according to any of the preceding claims, wherein the wind turbine is a floating wind turbine.

## FIG. 1

FIG. 2

X

Y —  —  —  24  —  240  —  —  241  —  —  — Y

25

23

10

220

22

230

21

20

X

**FIG. 3a**

**FIG. 3b**

FIG. 4

EP 4 435 252 A1

FIG. 5

FIG. 6a

FIG. 6b

FIG. 7

Europäisches
Patentamt

European
Patent Office

Office européen
des brevets

# EUROPEAN SEARCH REPORT

Application Number

EP 23 16 3473

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/243392 A1 (SLOTH ERIK [DK]) 30 September 2010 (2010-09-30) | 1-3,5,6, 10,11 | INV. F03D7/02 |
| Y | * paragraph [0013] – paragraph [0015]; | 4,7 | F16F7/10 |
| A | figures 1,2 * | 8,9 | F16F15/22 |
|  | * paragraph [0019] * |  |  |
|  | * claims 1,9 * |  |  |
|  | ----- |  |  |
| Y | EP 3 341 627 B1 (FM ENERGIE GMBH & CO KG [DE]) 25 September 2019 (2019-09-25) | 4,7 |  |
|  | * claim 1; figures 10a,10b * |  |  |
|  | ----- |  |  |

TECHNICAL FIELDS
SEARCHED      (IPC)

F03D
F16F

The present search report has been drawn up for all claims

| Place of search | Date of completion of the search | Examiner |
|---|---|---|
| The Hague | 10 August 2023 | Król, Marcin |

EPO FORM 1503 03.82 (P04C01)

## ANNEX TO THE EUROPEAN SEARCH REPORT
## ON EUROPEAN PATENT APPLICATION NO.

EP 23 16 3473

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2023

| Patent document cited in search report | | Publication date | Patent family member(s) | | Publication date |
|---|---|---|---|---|---|
| US 2010243392 | A1 | 30-09-2010 | AT | 517216 T | 15-08-2011 |
| | | | EP | 2167748 A1 | 31-03-2010 |
| | | | US | 2010243392 A1 | 30-09-2010 |
| | | | WO | 2008145122 A1 | 04-12-2008 |
| EP 3341627 | B1 | 25-09-2019 | CN | 108350969 A | 31-07-2018 |
| | | | DK | 3341627 T3 | 06-01-2020 |
| | | | EP | 3341627 A1 | 04-07-2018 |
| | | | ES | 2763035 T3 | 26-05-2020 |
| | | | JP | 6965239 B2 | 10-11-2021 |
| | | | JP | 2018529901 A | 11-10-2018 |
| | | | KR | 20180044383 A | 02-05-2018 |
| | | | PT | 3341627 T | 11-12-2019 |
| | | | US | 2018252287 A1 | 06-09-2018 |
| | | | WO | 2017036581 A1 | 09-03-2017 |

EPO FORM P0459

For more details about this annex : see Official Journal of the European Patent Office, No. 12/82